# EUROPÄISCHE PATENTSCHRIFT

(11) **EP 0 563 710 B1**
(45) Veröffentlichungstag und Bekanntmachung des Hinweises auf die Patenterteilung: **17.09.1997**
(21) Anmeldenummer: 93104572.8
(22) Anmeldetag: 19.03.1993
(51) Int. Cl.: C08L 21/00

(54) **Kautschukmischungen**
Rubber compositions
Compositions de caoutchouc

(30) Priorität: 28.03.1992 DE 4210210
(43) Veröffentlichungstag der Anmeldung: 06.10.1993
(73) Patentinhaber: HOECHST AKTIENGESELLSCHAFT, 65926 Frankfurt am Main (DE)
(72) Erfinder: Sattelmeyer, Richard, Dr., W-6200 Wiesbaden (DE); Leicht, Erhard, Dr., W-6238 Hofheim (DE); Wallenwein, Siegfried, W-6087 Büttelborn 2 (DE)

(56) Entgegenhaltungen:
- EP-A- 0 197 395
- GB-A- 1 477 606
- CHEMICAL ABSTRACTS, vol. 81, no. 12, 1972, Columbus, Ohio, US; abstract no. 64968b, N. HAYASHI ET AL. 'Rubber compounds with improved impact strength and resiliency'
- DATABASE WPI Section Ch, Week 847, Derwent Publications Ltd., London, GB; Class A, AN 84-040919

## Beschreibung

Zum Thema optimale Eigenschaften von Kautschukmischungen für die Laufflächen von Fahrzeugreifen wurde eine Anzahl Arbeiten veröffentlicht, so zum Beispiel K.-H. Nordsiek, Kautschuk + Gummi, Kunststoffe (KGK), 39 (1986) S. 599 und KGK, 38 (1985) S. 178 sowie L. Gargani et al. (KGK), 40 (1987) S. 935, außerdem S. Futamura und M.L. Engelhardt, European Rubber Journal, Special Issue 1986, S. 26 und L.F. Gatti, ACS-Rubber Division, 1987 Winter Meeting Technical Papers S. 64.

Alle diese und weitere nicht genannte Untersuchungen kamen zu dem Ergebnis, daß der Rollwiderstand und das Naßrutschverhalten von Fahrzeugreifen anhand der viskoelastischen Meßgrößen der Gummimischungen beurteilt werden können. Als in diesem Sinne geeignete Meßgrößen haben sich der Speichermodul G' oder Verlustmodul G'' und der Verlustfaktor d = tan δ = G"/G' erwiesen, die jeweils in Abhängigkeit von der Temperatur gemessen werden. Diese Erkenntnisse lassen die Aussage zu, daß hohe Werte für G'' (bzw. d) bei tieferen Temperaturen (z.B. 0 - 30 °C, evtl. auch tiefer) zu einem hohen Naßrutschwiderstand und tiefere Werte von G'' (bzw. d) bei höheren Temperaturen (70 - 90 °C) zu einem niedrigeren Rollwiderstand führen.

Mit den früher eingesetzten Kautschuktypen, wie den in Emulsion polymerisierten SBR-Kautschuken und Butadien- sowie Isopren- oder auch Natur-Kautschuk, lasssen sich die viskoelastischen Eigenschaften nicht in dem gewünschten Maß beeinflussen. Deshalb wurden Kautschuktypen mit einem höheren Gehalt an 1,2-Strukturen, sogenannte Vinylkautschuke, entwickelt, die eine höhere Glastemperatur besitzen und dadurch eine Erhöhung von G'' bzw. d bei tiefen Temperaturen ermöglichen. Die Vinylkautschuke können nicht in Emulsion, sondern nur als Lösungsmittelpolymerisate in organischem Medium hergestellt werden und sind zum Teil erst in Versuchsmengen und nicht aus der Großproduktion verfügbar. Das Konzept des "integralen Kautschuks", das heißt die Mischung einer Reihe von Kautschuktypen mit steigenden Glastemperaturen zur Erzielung der gewünschten Gesamteigenschaften, ließ sich bisher noch nicht großtechnisch verwirklichen. Somit ist eine einfachere Lösung dieses Problems immer noch erwünscht.

Aus JP-A 48 075 642 sind Mischungen aus polarem ungesättigtem Kautschuk, einem polaren Harz und einem unpolaren ungesättigten Kautschuk bekannt. Aus SU-A 1 008 216 sind Mischungen aus EPDM-Kautschuk, Butadien-Nitril-Kautschuk und methacryliertem Phenol-Formaldehyd-Harz bekannt. Aus EP-A-197 395 sind sogenannte verstärkte Kautschukmischungen bekannt, die aus zwei verschiedenen Kautschuktypen bestehen, nämlich einem unpolaren und einem polaren Kautschuk. Daneben enthalten diese Mischungen noch ein Phenolnovolakharz als Verstärker sowie einen Härter. Bei diesen Kautschukmischungen erreicht man zwar sehr hohe Verstärkungseffekte und hohe G'-Werte, aber keine überproportionale Steigerung von G" im tiefen Temperaturbereich.

Es wurde nun gefunden, daß solche Kautschukmischungen den gewünschten hohen G"-Wert bei tiefen Temperaturen bzw. niedrigen G"-Wert bei höheren Temperaturen aufweisen, wenn diese Mischungen ein Phenolnovolakharz sowie einen Weichmacher, aber kein Härtungsmittel enthalten.

Gegenstand der Erfindung sind Kautschukmischungen, bestehend aus Massenanteilen, bezogen auf die Kautschukmasse, von A) 81 bis 99,95 % mindestens eines unpolaren Kautschuks und B) 0,05 bis 19 % mindestens eines polaren Kautschuks sowie zusätzlich C) 0,01 bis 14 % der Masse der Kautschukmischung an mindestens einem Phenolharz, sowie zusätzlich D) einem Weichmacher und E) üblichen Zusatzstoffen, dadurch gekennzeichnet, daß das Phenolharz C) nicht selbsthärtend ist und die Mischung kein Härtungsmittel für das Phenolharz enthält, und daß das Phenolharz C) durch Umsetzung von Aldehyden mit Phenolen hergestellt wird, ausgewählt aus der Gruppe Phenol, mehrwertige Ein- und Mehrkernphenole, Bisphenole, sowie alkyl- und aryl-substituierten ein- und mehrwertige Phenole mit 1 bis 20 Kohlenstoffatomen im Substituenten.

Geeignete unpolare Kautschuktypen A) sind beispielsweise Naturkautschuk (NR), Styrol-Butadien-Kautschuk (SBR), Polybutadien, Polyisopren, Transpolyoctenylenkautschuk, Butylkautschuk, Ethylen-Propylen-Dien-Terpolymer-Kautschuk oder deren Gemische, wie sie gewöhnlich in der Reifenindustrie oder zur Herstellung technischer Gummiwaren verwendet werden. Styrol-Butadien-, Butadien-, Isopren- und Naturkautschuk oder Mischungen dieser Kautschuktypen mit untergeordneten Mengen an anderen Kautschuktypen sind bevorzugt. Sie können in beliebiger Form, zum Beispiel als Ballen oder Pulver sowie zum Beispiel mit Ruß vorgemischt, Anwendung finden.

Die als Komponente B) eingesetzten polaren Kautschuke sind hochmolekulare Verbindungen, die im Polymermolekül stark polare Gruppen enthalten. Dazu zählen Polymere aus ungesättigten Verbindungen, welche polare Reste wie Nitril-, Halogen-, Carboxyl- oder Ester-Gruppen enthalten und deren Copolymere untereinander und mit Olefinen, wie zum Beispiel Ethylen oder Propylen bzw. Butadien oder Isopren oder/und Styrol sowie Epoxid-, Halogensulfon- oder urethangruppenhaltige Polymere. Beispielsweise kann als Nitrilkautschuk handelsübliches ®Krynac bzw. ®Perbunan N, Hersteller Polysar bzw. Bayer, oder ®Hycar, Hersteller Goodrich, und als Acrylatkautschuk handelsübliches ®Vamac, Hersteller DuPont verwendet werden. Als Polyurethankautschuk ist handelsübliches ®Desmocoll, Hersteller Bayer, als Polychloroprenkautschuk zum Beispiel handelsübliches ®Neoprene, Hersteller DuPont und chlorsulfoniertes Polyethylen, zum Beispiel handelsübliches ®Hypalon, Hersteller DuPont einsetzbar. Auch Mischungen solcher Kautschuktypen, zum Beispiel der verschiedenen Nitrilkautschuke oder von Nitril- und Polyurethankautschuken sind möglich. Weiterhin können zusätzlich modifizierte Produkte angewendet werden wie z.B. Nitrilkautschuke, welche Carboxyl- oder Amin- bzw. Vinyl- oder Hydroxylgruppen enthalten.

Der polare Kautschuk kann in üblicher Lieferform vorliegen und bei dem erfindungsgemäßen Verfahren entweder direkt in die Kautschukmischung eingearbeitet oder als Modifizierungsmittel in einer anderen Mischungskomponente, zum Beispiel in dem Harz, enthalten sein oder als Masterbatch mit Ruß vorliegen. Der Masseanteil der polaren Kautschuke in der Mischung kann, bezogen auf eine Gesamtmenge von 100 GT (Gewichtsteile) sämtlicher Kautschuktypen 0,05 - 19 GT, vorzugsweise 0,1 - 14 GT und insbesondere bevorzugt 0,3 - 9 GT betragen.

Geeignete Harze C) sind alle nicht selbsthärtenden Phenolharze wie Phenolnovolake oder Mehrkernphenole. Auch monomere Phenole, wie zum Beispiel Alkylphenole, können eingesetzt werden, jedoch ist deren Verwendung aus Gründen des Gesundheits- und Umweltschutzes nicht empfehlenswert. Besonders geeignete Novolakharze sind zum Beispiel solche aus Phenol und/oder mehrwertigen Ein- oder Mehrkernphenolen wie Resorcin oder Bisphenolen (zum Beispiel Diphenylolpropan) und/oder aus substituierten ein- oder mehrwertigen Phenolen, wie Alkyl- oder Aralkylphenolen mit zum Beispiel 1 bis 20, vorzugsweise 4 bis 18 C-Atomen im Substituenten, wie tert. Butylphenol, Octylphenol, Pentylphenol, Cashew-Nußschalenöl sowie Novolakharze auf der Basis von styrolisiertem oder mit Fettsäuren, wie Leinölfettsäuren, modifiziertem Phenol oder Phenylphenol. Die Herstellung der Harze durch Reaktion des Phenols oder des Gemisches von Phenolen mit den Aldehyden, wie Acetaldehyd oder Butyraldehyd, vorzugsweise aber Formaldehyd, erfolgt im sauren Medium gemäß dem Stand der Technik. Die Novolake können auch weichmachende Anteile, wie Polyethylenglykole, Tallöl oder andere übliche Plastifiziermittel enthalten. Die Phenolharze können außerdem mit Naturharzen wie Kolophonium oder Tallharz sowie mit Terpenen modifiziert sein, wobei der Naturharzanteil in speziellen Fällen auch mengenmäßig überwiegen kann. Die eingesetzte Menge an Phenolharzen bzw. Summe von Phenolharzen mit Weichmachern und/oder Naturharzen beträgt, bezogen auf die Gesamtmenge von 100 GT sämtlicher Kautschuktypen von 0,01 bis 14 GT, vorzugsweise von 0,02 bis 11 GT und insbesondere bevorzugt von 0,05 bis 7 GT.

Als Weichmacher D) finden vorzugsweise Mineralöle Anwendung. Übliche Zusatzstoffe E) sind Füllstoffe, Vulkanisationsmittel, Beschleuniger, Aktivatoren, Wachse, Alterungsschutz- und Verarbeitungshilfsmittel.

Als Füllstoffe können neben aktiven Rußen und Kieselsäuren auch Kaolin, Kreide und/oder andere übliche Materialien Einsatz finden sowie auch Pigmente. Der Einsatz von Ruß ist bevorzugt. Als Verarbeitungshilfsmittel dienen übliche Öle oder Weichmacher.

Die Vulkanisation kann ohne Schwefel mit Vulkanisationsharzen erfolgen. Die Vulkanisation in Gegenwart von Schwefel ist aber bevorzugt. Ihr Verlauf kann durch Auswahl geeigneter, in der Kautschuktechnologie üblicher Beschleuniger, Aktivatoren und Regler den praktischen Erfordernissen angepaßt werden. Ferner werden vorteilhaft noch Alterungsschutzmittel zur Verbesserung der Eigenschaften der Vulkanisate zugesetzt.

Die erfindungsgemäß eingesetzten Ausgangsmischungen können in üblicher Weise in Innenmischern oder auf Mischwalzen hergestellt werden. Beim Einarbeiten der Harze kann es von Vorteil sein, wenn die Mischungstemperatur in irgendeiner Phase der Mischungsherstellung den Schmelzpunkt der Harze überschreitet, jedoch können ggf. auch Formulierungen, bei denen nach Zugabe der Harze die Mischtemperatur unterhalb des Schmelzpunktes bleibt, höhere Härten erzielen. Außerdem kann im Bedarfsfall zu einer unvulkanisierten erfindungsgemäßen Mischung eine zweite Kautschukmischung mit davon abweichender Zusammensetzung zugemischt und die so erhaltene Gesamtformulierung weiterverarbeitet werden.

Die erfindungsgemäß erhaltenen Mischungen können außer als Laufflächen für Fahrzeugreifen auch für andere Zwecke verwendet werden, beispielsweise für technische Gummiwaren wie Dämpfungselemente, Gummimanschetten, Beläge, Dichtungen oder Förderbänder. Dabei können die Mischungen in Schichten aufgetragen werden, die eine gute Haftung zu eingelegten Festigkeitsträgern wie Geweben oder Geflechten haben müssen. Zur Verbesserung der Haftung kann zusätzlich die Anwendung von Haftvermittlern wie Kobalt- oder anderen Metallverbindungen erfolgen.

Die nachfolgend beschriebenen Versuche dienen zur Erläuterung der Zusammensetzung und der Eigenschaften der erfindungsgemäßen Gummimischungen. Es wurden Versuchsreihen mit rußhaltigen Formulierungen durchgeführt, wobei jeweils ein Masterbatch aus dem entsprechenden Kautschuk A) mit Ruß verwendet wurde. Beim Mischvorgang wurden dann dazu der polare Kautschuk und eine Restmenge Ruß sowie die weiteren Komponenten in der Reihenfolge Stearinsäure, Zinkoxid, Alterungsschutzmittel und Phenolharz bei Temperaturen zwischen ca. 90 und 120 °C und anschließend bei Temperaturen unter 100 °C das Vulkanisationssystem zugegeben.

Nach der Vulkanisation, durchgeführt unter den bei der jeweiligen Versuchsserie angegebenen Bedingungen, wurden die erhaltenen Probekörper auf folgende Eigenschaften nach den in der Praxis üblichen Methoden untersucht:
Reißfestigkeit, Reißdehnung und Spannungswerte (bei 10 % bis 300 % Dehnung) gemäß DIN 53 504,
Härte Shore A nach DIN 53 505,
Rückprallelastizität nach DIN 53 512 und
Bestimmung von G', G" und d mit dem Rheometrics Dynamic Analyzer RDA 700

Die in den folgenden Tabellen genannten Gummimischungen enthielten neben den dort angegebenen Komponenten folgende übliche Zusatzstoffe (in Gewichtsteilen):

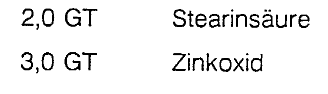

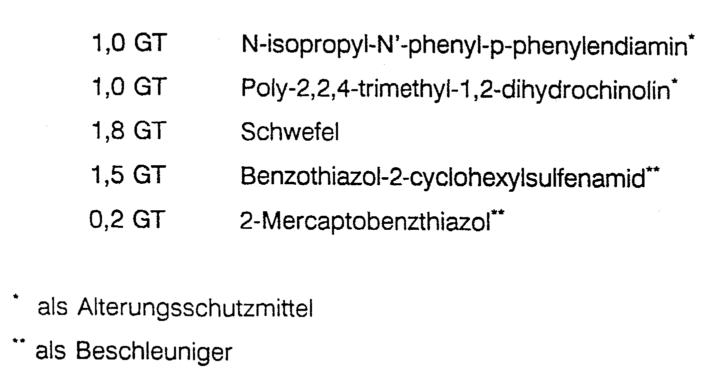

In den Beispielen beziehen sich die Mengenangaben stets auf Gewichtsteile.

### Beispiele

### Versuchsreihe 1 (Beispiel 1 und 2, Vergleich I und II)

Als SBR-Kautschuk wurde ein Produkt des Typs 1500 ®Buna Hüls 1500 mit einem NBR-Kautschuk mit 34 % Acrylnitrilgehalt (34 ACN, Typ ®Krynac 34.80, Hersteller Polysar) zusammen mit Ruß Typ N 330 und ein Mineralöl eingesetzt. Das Phenolharz 1 war ein handelsüblicher Phenolnovolak ®Alnovol VPN 1322 Hoechst AG mit einem Schmelzbereich von 70 - 80 °C/Kapillarverfahren DIN 53 736 und einer Viskosität der 50 %igen Lösung in 1-Methoxypropanol-2 bei 23 °C von 900 - 1250 mPa.s nach DIN 53 177.

Die Beispiele 1 und 2 zeigen die gewünschte Eigenschaft eines in Relation zum G' verhältnismäßig hohen G"-Wertes bei tieferer Temperatur (20 °C) und eines relativ zu G' niedrigeren G"-Wertes bei höherer Temepratur (70 °C). Gemeinsam mit dem hohen bzw. tiefen Wert von d bei 20 bzw. 70 °C werden damit die geforderten viskoelastischen Eigenschaften erreicht. Der Vergleichversuch I zeigt dagegen, daß ohne Zusatz von NBR-Kautschuk durch das unvernetzte Harz bei 0 bzw. 20 °C keine und bei 70 °C eine starke Erhöhung von G" erfolgt. Diese beiden Veränderungen gehen konträr zum gewünschten viskoelastischen Verhalten. Vergleichsversuch II weist anhand des hohen G'-Wertes bei 70 °C und der generell sehr hohen Härte den bereits bekannten Effekt der Steigerung der Verstärkungswirkung eines vernetzten Harzsystems aus Phenolnovolak und Härtungsmittel durch Zusatz von NBR-Kautschuk auf. Die gewünschten viskoelastischen Eigenschaften werden jedoch nicht erreicht.

### Versuchsreihe 2 (Beispiele 3 bis 6)

Mit denselben Komponenten wie in Versuchsreihe 1 wurden die Mengenverhältnisse von SBR- und NBR-Kautschuk sowie Öl und Phenolharz 1 variiert. Es bestätigte sich der Befund von Versuchsreihe 1, wobei die Erhöhung der G''-Werte bzw. von d im unteren Temperaturbereich mit steigenden Mengen von Phenolharz plus NBR-Kautschuk deutlich zunimmt.

### Versuchsreihe 3 (Beispiele 7 bis 10, Vergleich III)

Es wurden die gleichen Mischungsbestandteile wie bei den vorangehenden Versuchsreihen eingesetzt und die Anteile von NBR-Kautschuk und Harz verringert. Die Erhöhung der G"-Werte und des Verlusffaktors d bei 0 bzw. 20 °C sind klar erkennbar. Eine Betrachtung der Beispiele 1, 7 und 8 zeigt außerdem, daß eine Verringerung der Harzmenge bei gleichbleibendem Anteil von NBR-Kautschuk zu einer deutlichen Erniedrigung von G' und G'' führt und eine Verschiebung des Maximums von d zu tieferen Temepraturen hin erfolgt. Das Beispiel 9 zeigt gegenüber dem Vergleichsversuch III (ohne Harzzusatz bei sonst gleicher Mischungszusammensetzung) die starke Erhöhung von G'' bei 0 bzw. 20 °C und somit die synergetische Wirkung der erfindungsgemäßen Komposition. Darüber hinaus läßt III nur eine geringe Verminderung des Verlusffaktors d von 0 bzw. 20 °C auf 70 °C erkennen. Somit kann aus den Ergebnissen der erfindungsgemäßen Beispiele gegenüber den Vergleichsversuchen I und III auf eine gewisse synergetische Wirkung von polarem Kautschuk und Phenolharz bei der Erzielung der gewünschten viskoelastischen Eigenschaften geschlossen werden.

### Versuchsreihe 4 (Beispiele 11 bis 14)

In dieser Serie wurde ein handelsübliches Masterbatch aus SBR-Kautschuk, Ruß und Öl (®Buna Hüls 1808 der Firma Hüls AG) mit verschiedenen handelsüblichen polaren Kautschuken und dem Phenolharz 2 verwendet. Als polare Kautschuktypen dienten ein NBR-Kautschuk mit 27 % Acrylnitrilgehalt (®Krynac 27.50, Hersteller Firma Polysar), ein Polyurethan-Kautschuk (®Desmocoll 400, Hersteller Bayer AG), ein Acrylat-Kautschuk (®Vamac G, Hersteller DuPont) und ein Polychloropren-Kautschuk (®Neoprene AC weich, Hersteller DuPont). Das Phenolharz 2 war ein handelsüblicher Phenolnovolak mit einem Schmelzbereichvon 83 - 88 °C (Kapillarverfahren nach DIN 53 736) und einer Viskosität der 40 %-igen Lösung in 1-Methoxypropanol-2 bei 23 °C von 180 bis 270 mPa.s nach DIN 53 177 (Alnovol PN 320).

Die Versuchsergebnisse bestätigen auch bei diesen Zusätzen an unpolaren' Kautschuktypen die Erhöhung der Werte von d im Temperaturbereich zwischen 0 - 20 °C sowie die relativ hohen G"-Werte. Das Maximum für d in Beispiel 12 liegt mit ca. 0,36 bei 7 °C und übertrifft damit die Werte bei 0 bzw. 20 °C.

### Versuchsreihe 5 (Beispiel 16, Vergleichsbeispiele 15, IV und V)

In dieser Reihe wurden erfindungsgemäße Gummimischungen auf Basis von Natur- bzw. EPDM-Kautschuk hergestellt und mit entsprechenden Mischungen ohne Zusatz von polarem Kautschuk verglichen. Der Natur- bzw. der EPDM-Kautschuk waren handelsübliche Produkte (RSS Nr. 2 von Malaysian Rubber bzw. ®Keltan 514, Hersteller DSM), als polarer Kautschuk diente Polyurethankautschuk wie in Beispiel 12 und als Phenolharz das in Versuchsreihe 4 beschriebene Produkt. In Übereinstimmung zu der auf Seite 6 und 7 angegebenen Rezeptur enthielt die Mischung auf Basis von Naturkautschuk außer den in der Tabelle angegebenen Komponenten dieselben Mengen an Stearinsäure, Zinkoxid und Alterungsschutzmittel, jedoch bestand das Vulkanisationssystem aus 2,5 GT Schwefel, 0,9 GT Benzothiazol-2-cyclohexylsulfenamid und 0,3 GT Tetramethylthiurammonosulfid. Die EPDM-Mischung enthielt außer den tabellarisch aufgelisteten Bestandteilen noch 5 GT Zinkoxid, 3 GT Stearinsäure. 3 GT Calciumoxid, 0,5 GT Schwefel, 2 GT Tetramethylthiuramdisulfid (50 &-ige Präparation), 1,9 GT Zn-dimethyldithiocarbamat (80 %-ig) und 1,5 GT Dithiodimorpholin.

Die Ergebnisse dieser Versuchsreihe bestätigen die bereits vorher diskutierten Befunde. Der im Beispiel 16 für den Verlustfaktor d gemessene Wert bei 0 °C stellt das Maximum in diesem Temperaturbereich dar.

### Versuchsreihe 6 (Beispiele 17 bis 20)

In der gleichen Basisformulierung wie bei Versuchsreihe 4 aus SBR-Kautschuk, Ruß, Öl, Hilfsstoffen und Vulkanisationssystem wurden das Phenolharz 3 sowie ein Zweikernphenol bzw. ein nichtkondensiertes Alkylphenol eingesetzt. Als polare Kautschuke dienten der Polyurethan- und der Nitril-Kautschuk von Versuchsreihe 4.

Das Phenolharz 3 war ein praktisch phenolfreier Novolak mit einem Schmelzpunkt nach DIN 53 736 von ca. 104 °C und einer Viskosität der 50%-igen Lösung in 1-Methoxypropanol-2 bei 23 °C (gemessen nach DIN 53 177) von ca. 1800 mPa.s. Das Zweikernphenol war handelsübliches Bisphenol F und das nicht kondensierte Alkylphenol war Octylphenol (auch als p-tert.-Octylphenol bezeichnet). Letztgenannte Verbindung sollte die Möglichkeit des Einsatzes von nicht kondensierten Phenolen demonstrieren, wobei wegen der hohen Giftigkeit und ätzenden Wirkung nicht das Phenol (Hydroxybenzol) selbst, sondern das genannte Produkt gewählt wurde. Bei einer großtechnischen Anwendung sollten aus Gründen des Gesundheits- und Umweltschutzes keine nicht kondensierten Phenole oder Novolake mit einem merklichen Gehalt an freiem Phenol eingesetzt werden.

### Versuchsreihe 7 (Beispiele 21 bis 23, Vergleich VI)

In dieser Reihe wurden erfindungsgemäße Gummimischungen auf Basis von Naturkautschuk hergestellt und mit einer entsprechenden Mischung ohne Zusatz von polarem Kautschuk verglichen. Der Naturkautschuk war vom gleichen Typ wie in Versuchsreihe 5, als polarer Kautschuk diente ein NBR-Kautschuk mit 40 % Acrylnitrilgehalt (®Krynac 40.50, Hersteller Firma Polysar) und als Phenolharz das in Versuchsreihe 6 beschriebene Produkt. In Übereinstimmung zu der auf Seite 6 und 7 angegebenen Rezeptur enthielt die Mischung außer den in der Tabelle angegebenen Komponenten dieselben Mengen an Stearinsäure, Zinkoxid und Alterungsschutzmittel, jedoch bestand das Vulkanisationssystem aus 2,2 GT Schwefel, 1,0 GT Benzothiazol-2-cyclohexylsulfenamid und 0,2 GT N,N'-Diphenylguanidin.

Die Ergebnisse dieser Versuchsreihe bestätigen die bereits vorher diskutierten Befunde.

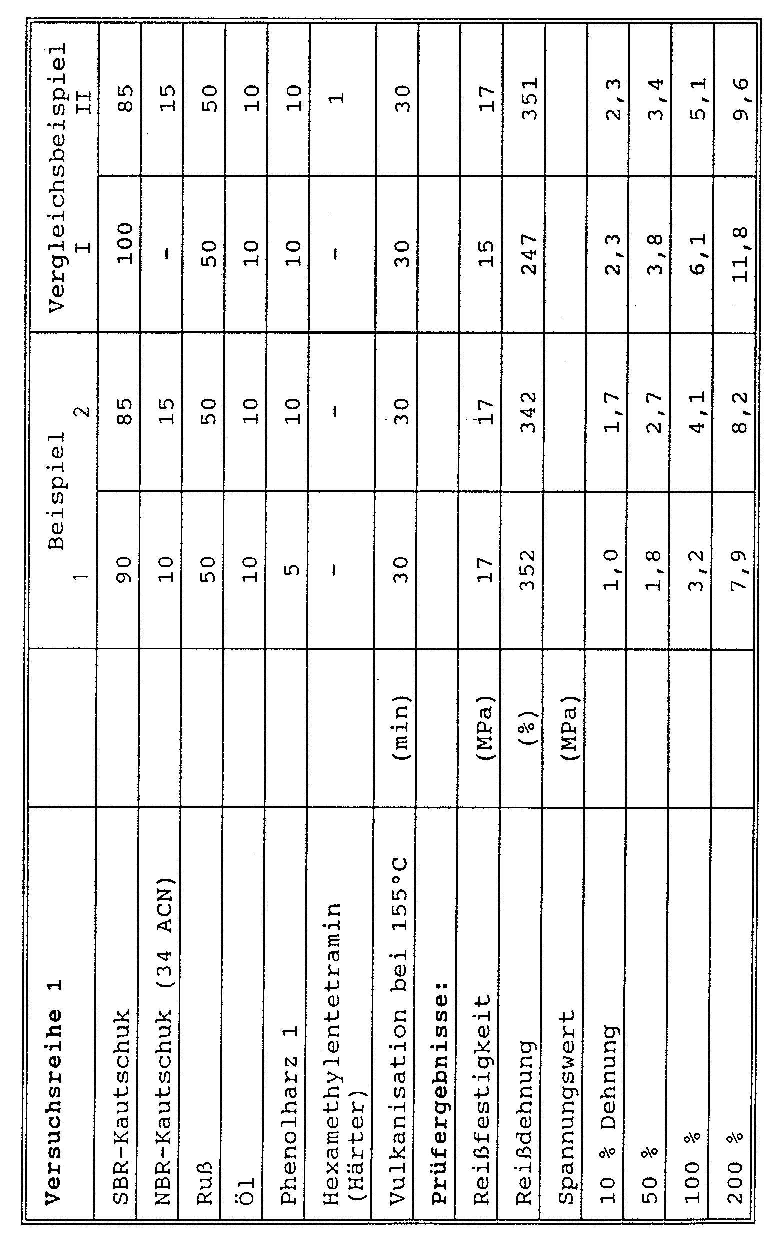

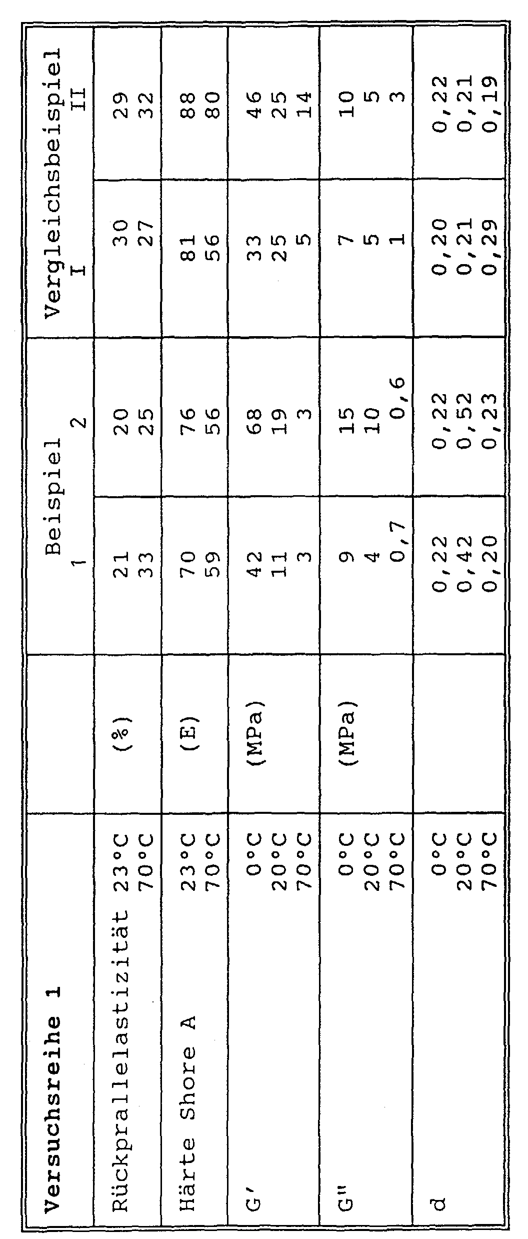

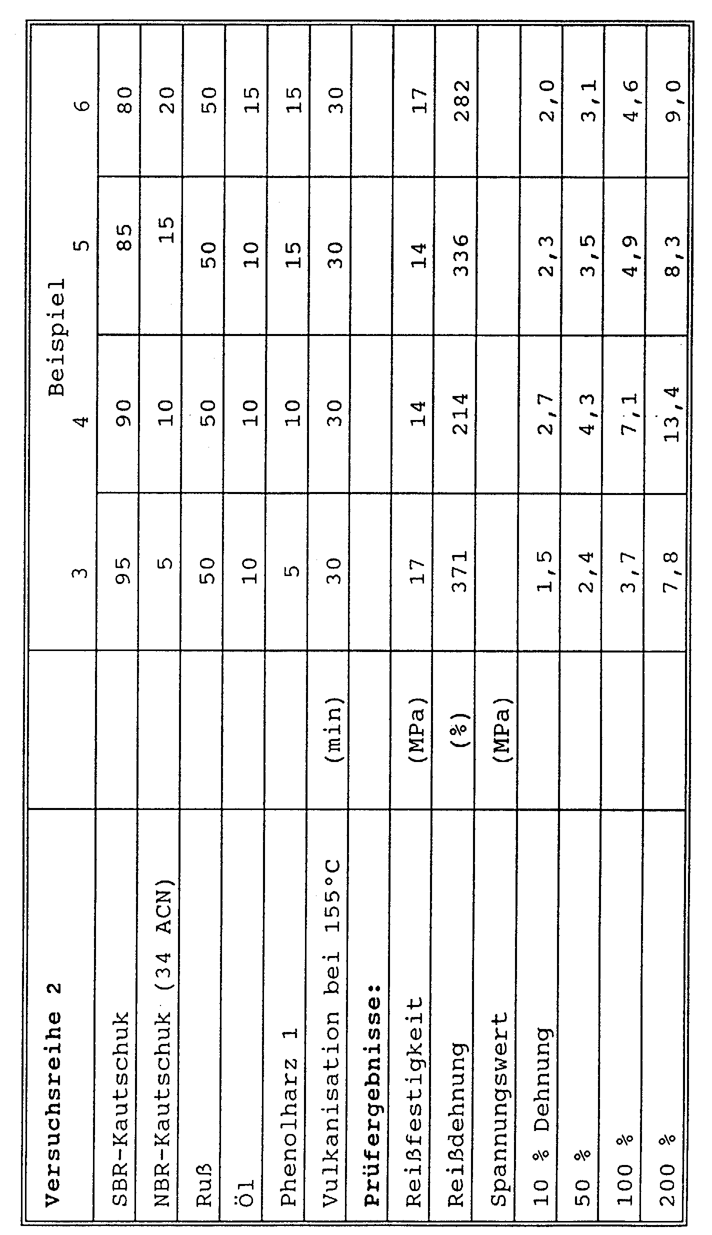

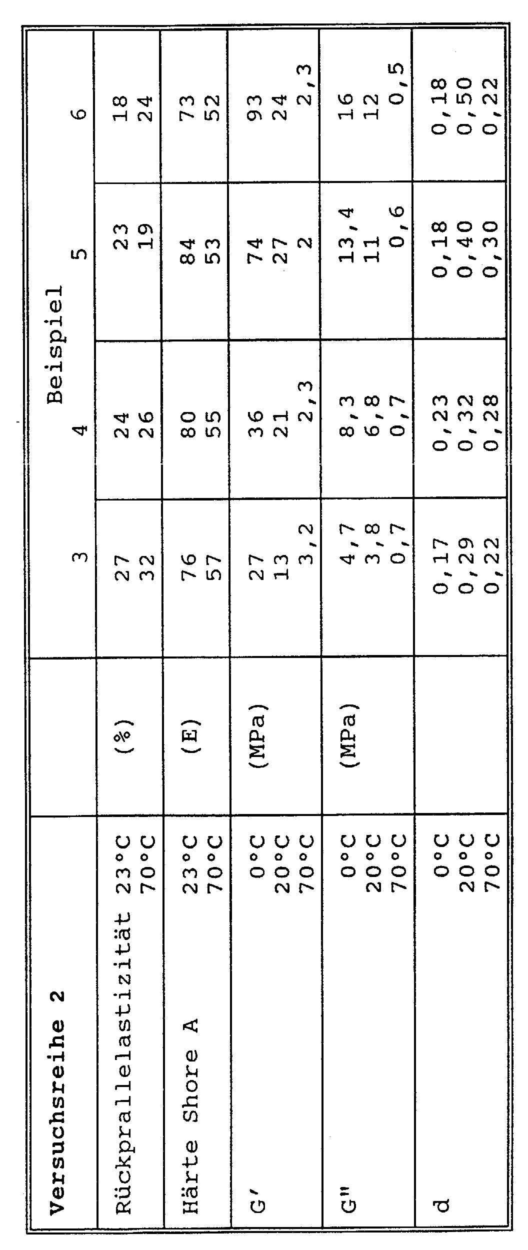

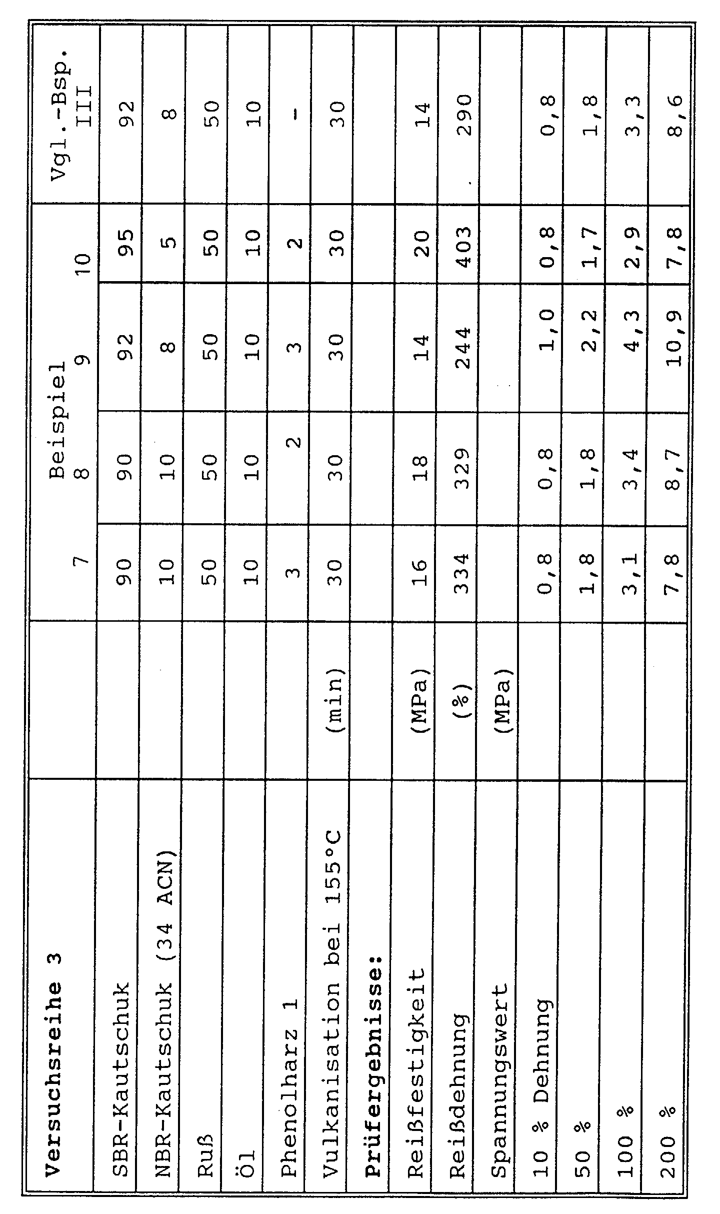

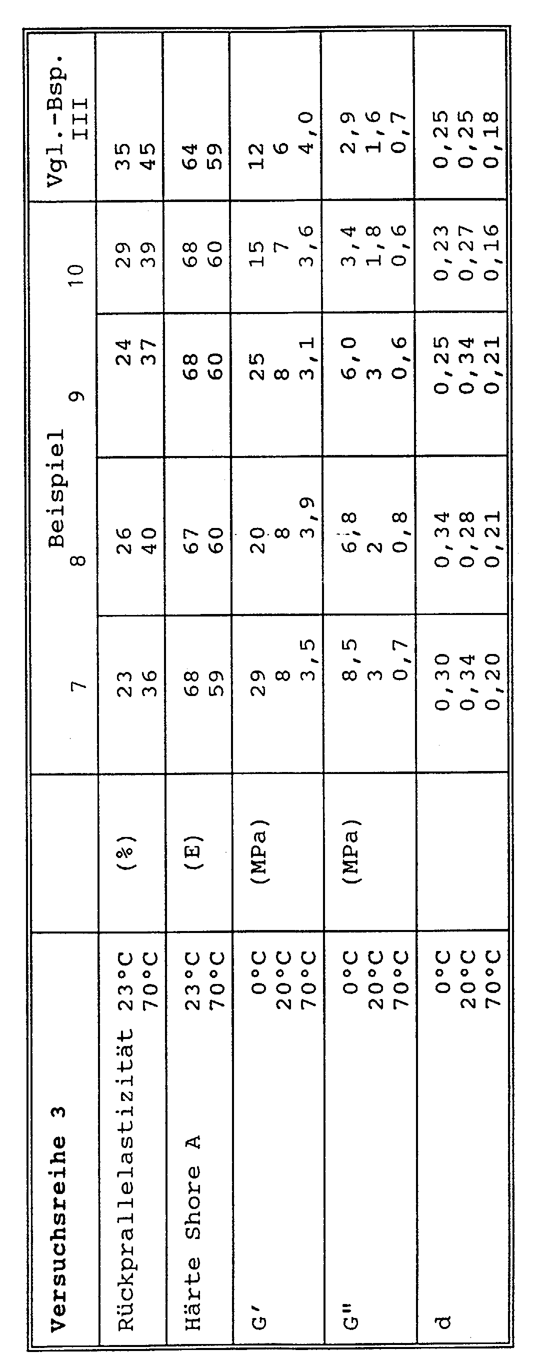

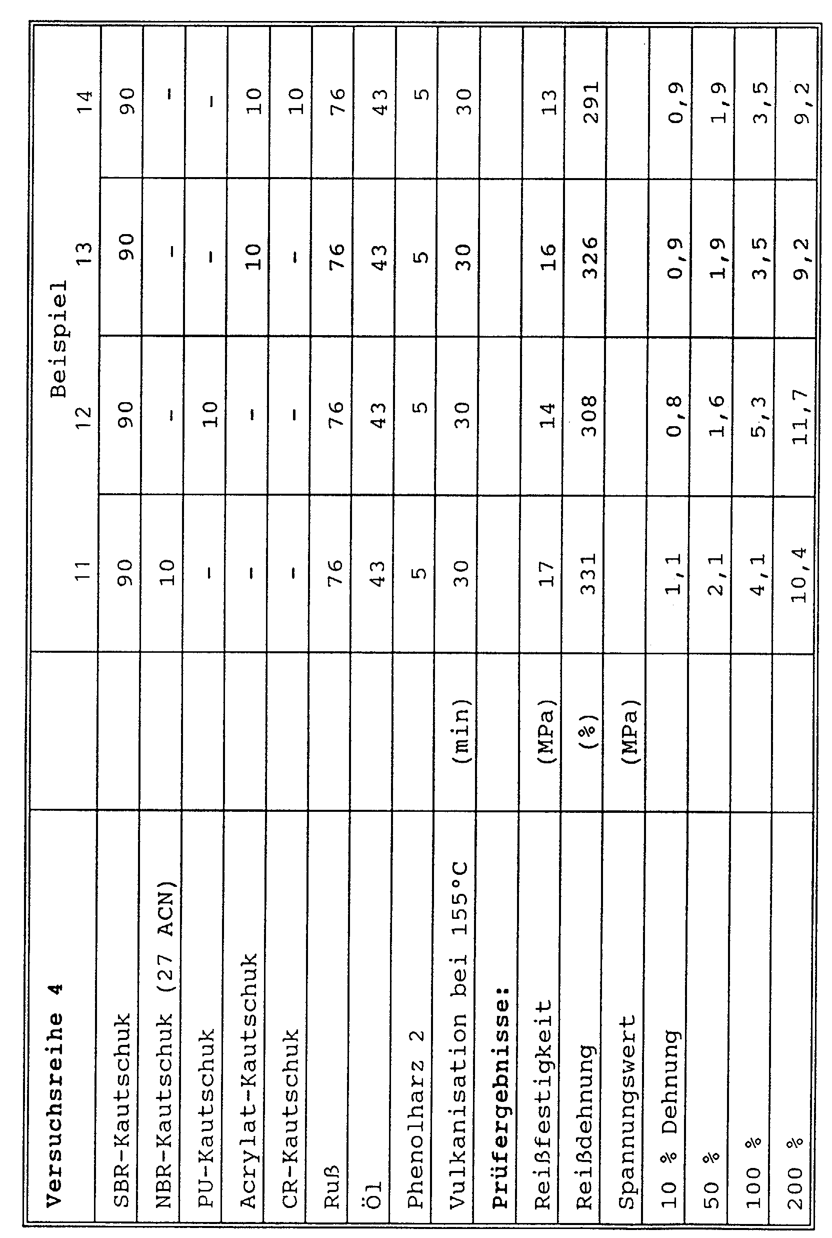

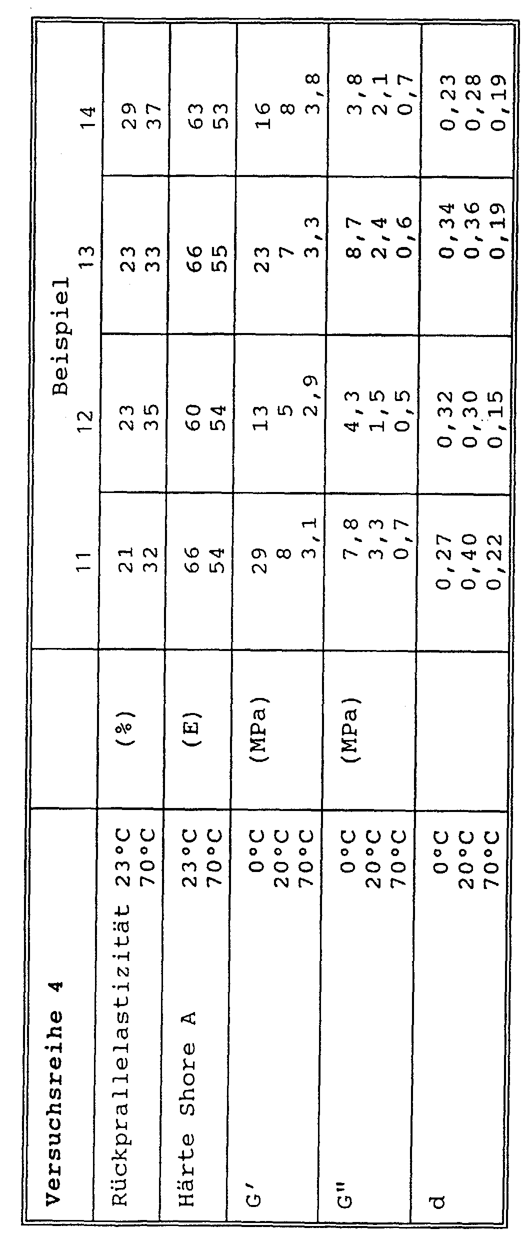

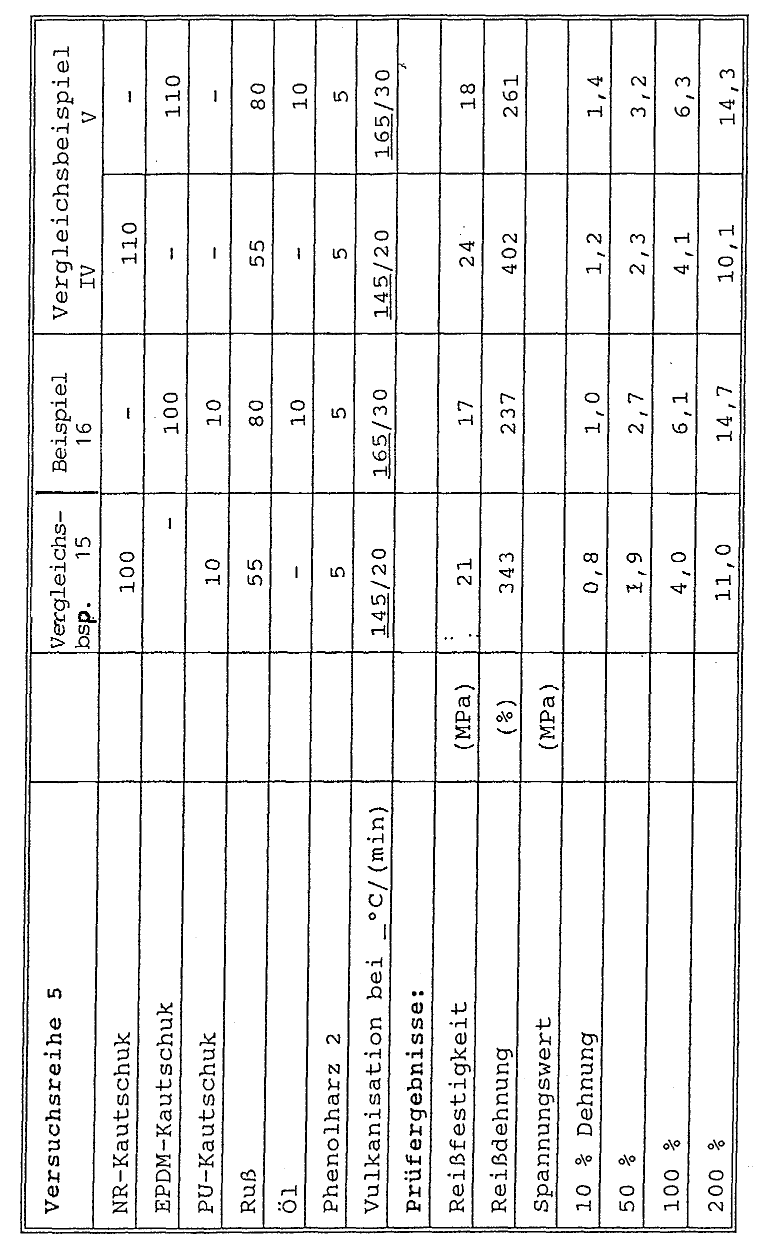

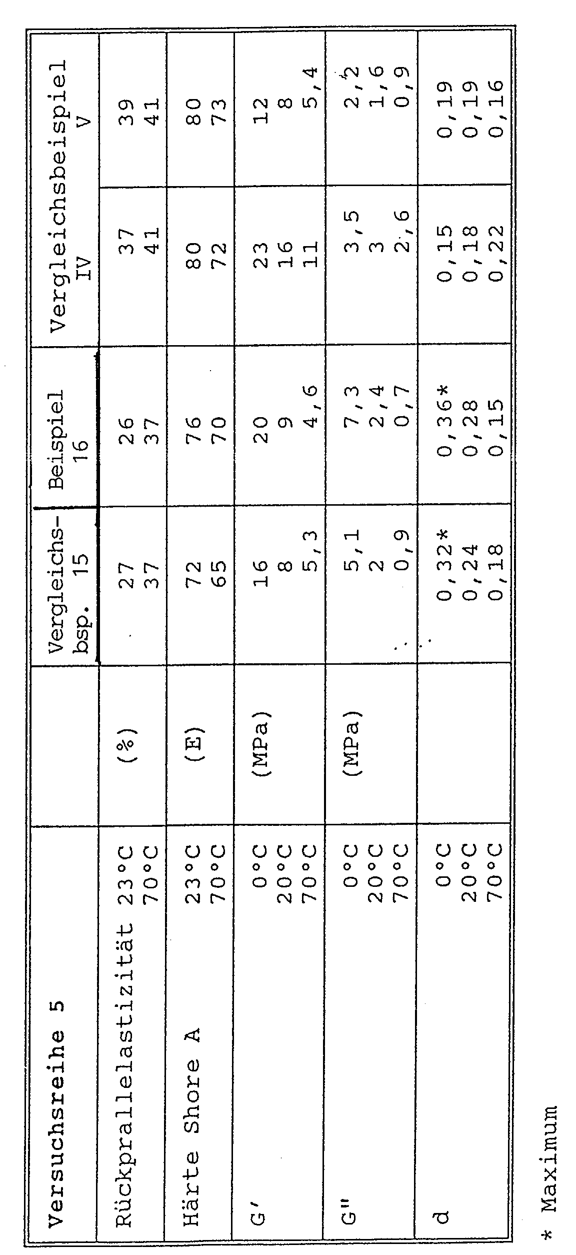

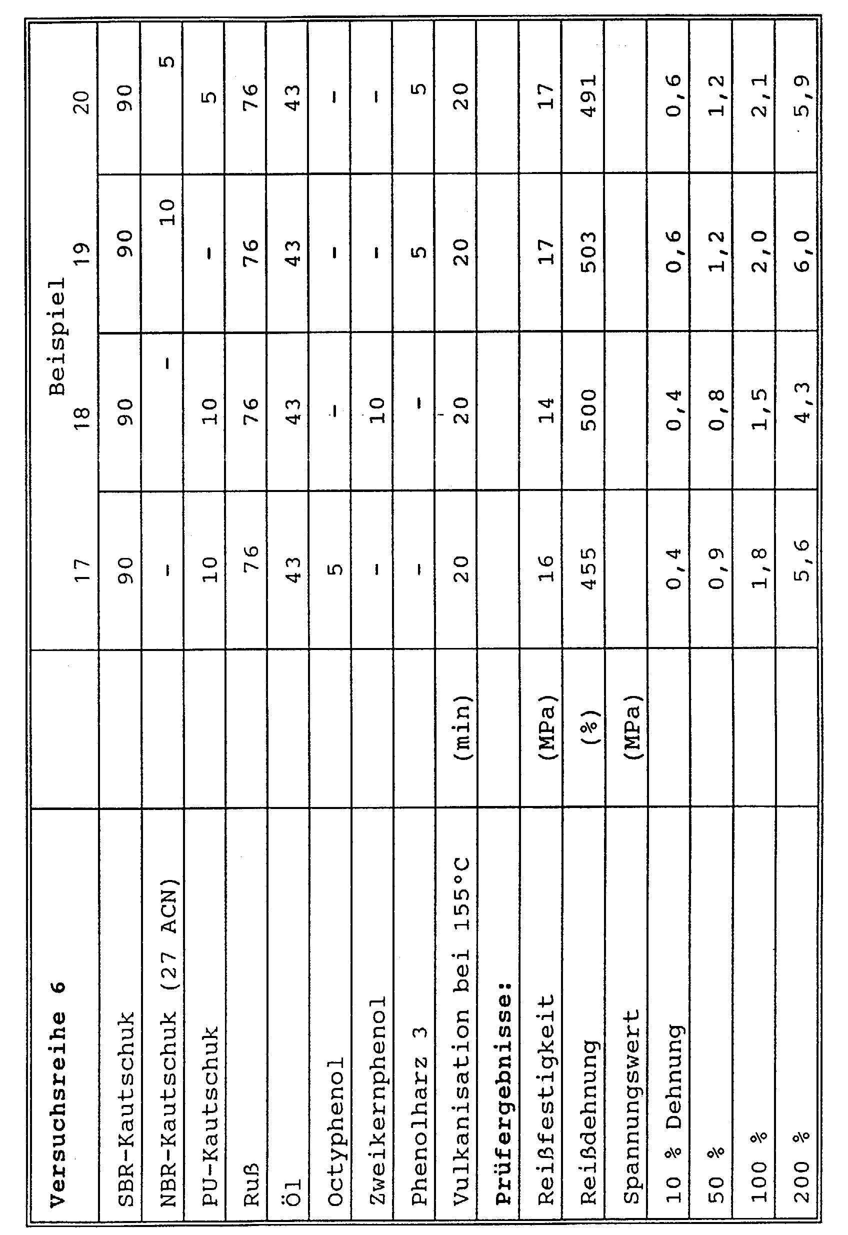

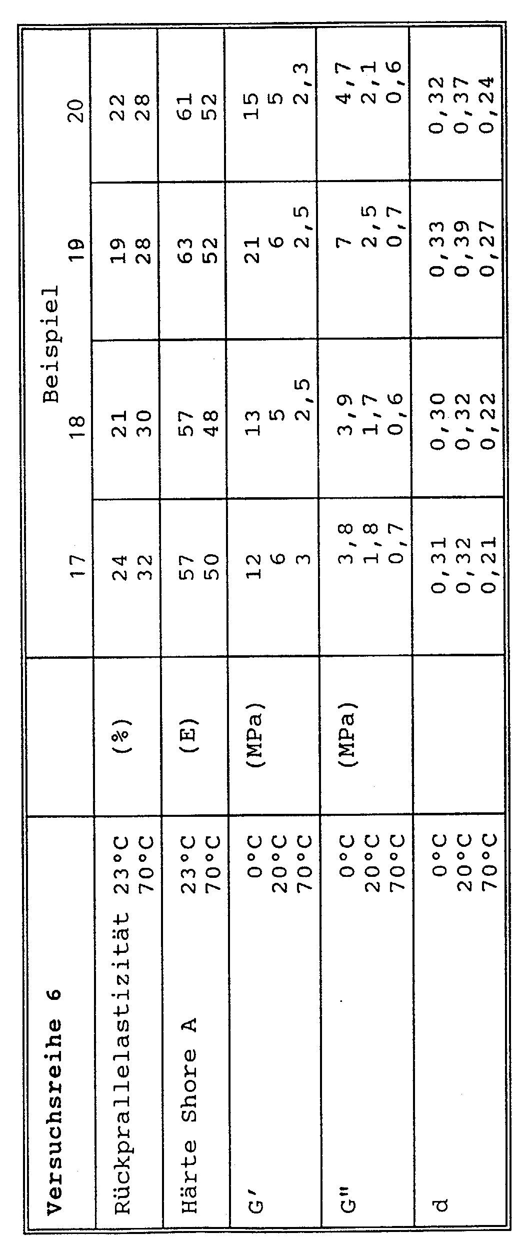

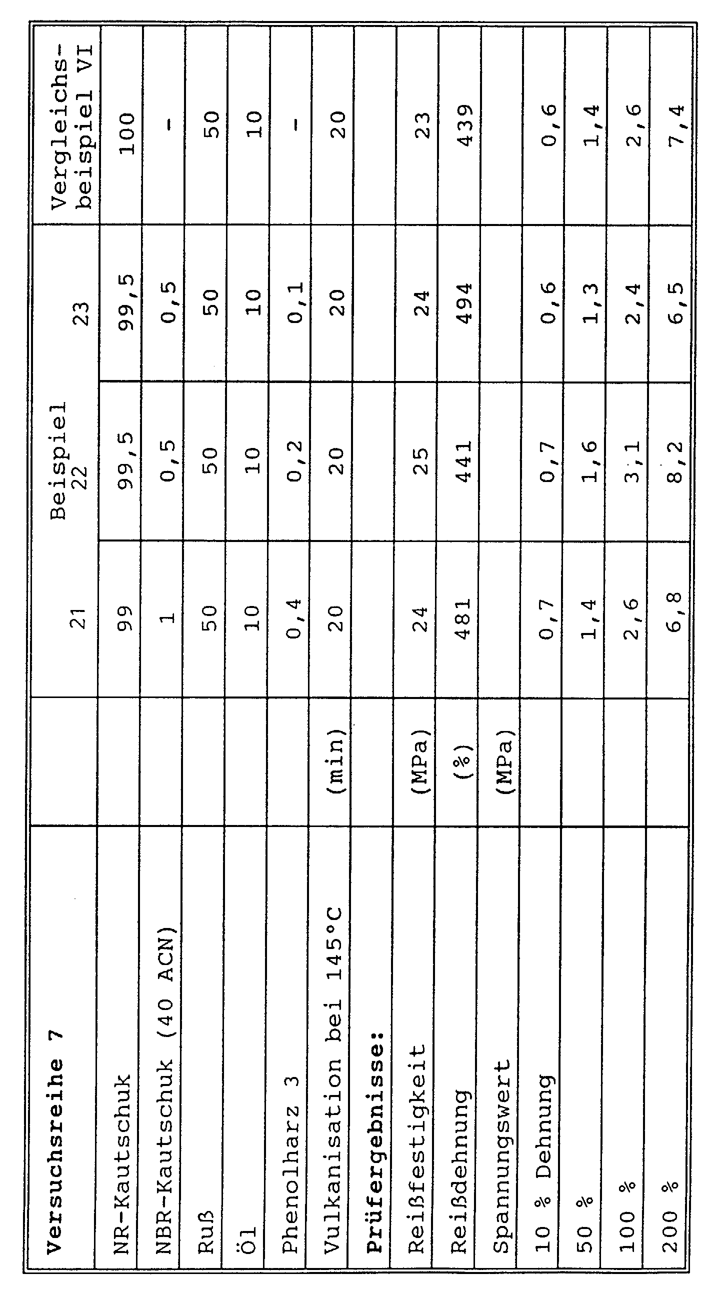

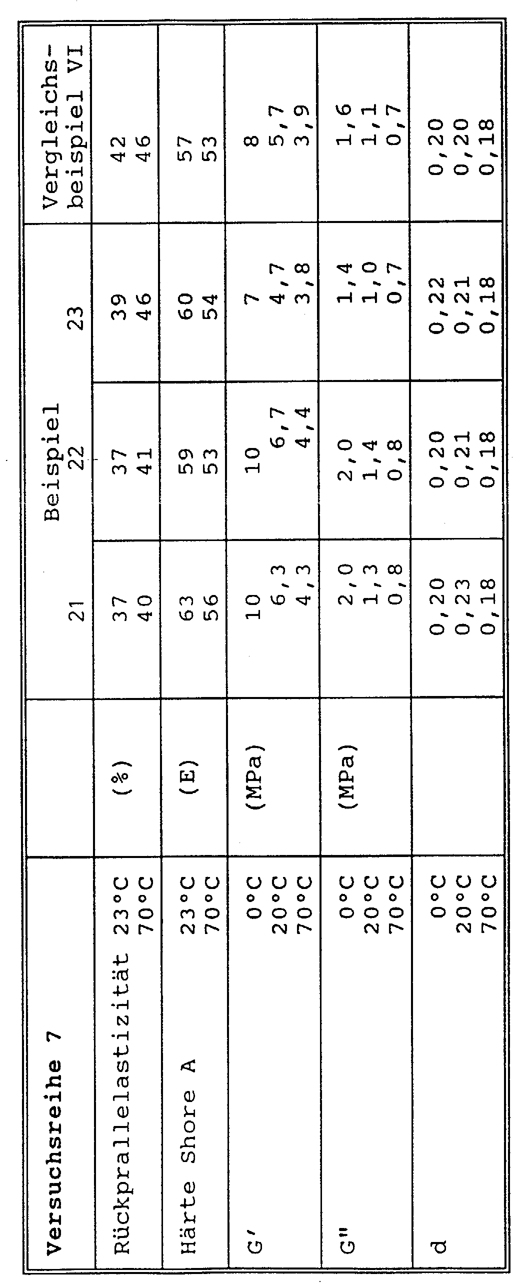

## Patentansprüche

1. Kautschukmischungen, bestehend aus Massenanteilen, bezogen auf die Kautschukmasse, von
A) 81 bis 99,95 % mindestens eines unpolaren Kautschuks und
B) 0,05 bis 19 % mindestens eines polaren Kautschuks sowie zusätzlich
C) 0,01 bis 14 % der Masse der Kautschukmischung an mindestens einem Phenolharz sowie zusätzlich
D) einem Weichmacher und
E) üblichen Zusatzstoffen,
dadurch gekennzeichnet, daß das Phenolharz C) nicht selbsthärtend ist und die Mischung kein Härtungsmittel für das Phenolharz enthält, und daß das Phenolharz C) durch Umsetzung von Aldehyden mit Phenolen hergestellt wird, ausgewählt aus der Gruppe Phenol, mehrwertige Ein- und Mehrkernphenole, Bisphenole, sowie alkyl- und aryl-substituierten ein- und mehrwertige Phenole mit 1 bis 20 Kohlenstoffatomen im Substituenten.

2. Kautschukmischungen nach Anspruch 1, dadurch gekennzeichnet, daß der unpolare Kautschuk A) Natur-, Styrol-Butadien-, Polybutadien-, Polyisopren-, Äthylen-Propylen-Dien-Terpolymer- oder Butyl-Kautschuk ist.

3. Kautschukmischungen nach Anspruch 1 und/oder 2, dadurch gekennzeichnet, daß der polare Kautschuk B) Polychloropren, chlorsulfoniertes Polyäthylen, Nitril-, Acrylat-, oder ein Polyurethan-Kautschuk ist.

4. Kautschukmischungen nach einem oder mehreren der Ansprüche 1 bis 3, dadurch gekennzeichnet, daß das Phenolharz C) durch Kondensation mit Formaldehyd und/oder Butyraldehyd erhalten wird.

5. Kautschukmischungen nach einem oder mehreren der Ansprüche 1 bis 4, dadurch gekennzeichnet, daß das Phenolharz C) ein mit Styrol und/oder mit Fettsäuren modifizierter Phenolnovolak ist.

6. Kautschukmischungen nach einem oder mehreren der Ansprüche 1 bis 5, dadurch gekennzeichnet, daß das Phenolharz C) ein mit Naturharzen wie Kolophonium oder Terpen bzw. Tallharz modifiziertes Phenolharz ist, wobei der Naturharzanteil mengenmäßig überwiegen kann.

7. Kautschukmischungen nach einem oder mehreren der Ansprüche 1 bis 6, dadurch gekennzeichnet, daß der Weichmacher D) Mineralöl ist.

8. Kautschukmischungen nach einem oder mehreren der Ansprüche 1 bis 7, dadurch gekennzeichnet, daß das Phenolharz C) in der Mischung in einem Massenanteil von 0,02 bis 11 % bezogen auf die Summe der Massen der Komponenten A) und B) enthalten ist.

## Claims

1. Rubber mixture comprising mass fraction, relative to the mass of rubber, of
A) 81 to 99.95% of at least one nonpolar rubber,
B) 0.05 to 19% of at least one polar rubber and, additionally,
C) 0.01 to 14% of the mass of the rubber mixture of at least one phenolic resin and, additionally,
D) a plasticizer and
D) conventional additives,
characterized in that the phenolic resin C) is not self-curing and no curing agent for the phenolic resin is contained in the mixture, and that the phenolic resin is prepared by reacting aldehydes with phenols selected from the group comprising phenol, polyvalent mono- and polycyclic phenols, bisphenols and alkyl- and aryl-substituted mono- and polycyclic phenols having 1 to 20 carbon atoms in their substituents.

2. The rubber mixtures as claimed in claim 1, characterized in that the nonpolar rubber A) is natural rubber, styrenebutadiene rubber, polybutadiene rubber, polyisoprene rubber, ethylene-propylene-diene terpolymer rubber or butyl rubber.

3. The rubber mixtures as claimed in claim 1 and/or 2, characterized in that the polar rubber B) is polychloroprene, chlorosulfonated polyethylene, nitrile rubber, acrylate rubber, polyester rubber or a polyurethane rubber.

4. The rubber mixtures as claimed in one or more of claims 1 to 3, characterized in that the phenolic resin C) is obtained by condensation with formaldehyde and/or butyraldehyde.

5. The rubber mixtures as claimed in one or more of claims 1 to 4, characterized in that the phenolic resin C) is a phenol novolak modified with styrene and/or with fatty acids.

6. The rubber mixtures- as claimed in one or more of claims 1 to 5, characterized in that the phenolic resin C) is a phenolic resin modified with natural resins, such as colophony or terpene or rosin, it being possible for the fraction of natural resin to be predominant in terms of mass.

7. The rubber mixtures as claimed in one or more of claims 1 to 6, characterized in that the plasticizer D) is mineral oil.

8. The rubber mixtures as claimed in one or more of claims 1 to 7, which contains the phenolic resin C) in a mass fraction of from 0.02 to 11%, with respect to the sum of the masses of components A) and B).

## Revendications

1. Mélanges de caoutchoucs constitués de taux en poids, par rapport au poids de caoutchouc,
A) de 81 à 99,95% d'au moins un caoutchouc non polaire et
B) de 0,05 à 19% d'au moins un caoutchouc polaire ainsi que de plus
C) de 0,01 à 14%, par rapport du poids du mélange de caoutchouc, d'au moins une résine phénolique ainsi que de plus
D) d'un plastifiant et
E) des matières d'addition usuelles,
caractérisés en ce que la résine phénolique C) n'est pas autodurcissable et le mélange ne contient pas de durcisseur pour la résine phénolique, et en ce que l'on prépare la résine phénolique C) par réaction d'aldéhydes avec des phénols pris dans le groupe comportant le phénol, des phénols polyfonctionels mono- et polycycliques, des bisphénols ainsi que des phénols mono- et polyfonctionnels substitués par alkyles et aryles avec 1 à 20 atomes de carbone dans le substituant.

2. Mélanges de caoutchoucs selon la revendication 1, caractérisés en ce que le caoutchouc non polaire A est le caoutchouc naturel, le caoutchouc styrène-butadiène, le caoutchouc polybutadiène, le caoutchouc polyisoprène, le caoutchouc terpolymère d'éthylène-propylène-diène ou le caoutchouc butyle.

3. Mélanges de caoutchoucs selon la revendication 1 et/ou 2, caractérisés en ce que le caoutchouc polaire B) est le polychloroprène, le polyéthylène chlorosulfoné, un caoutchouc nitrile, acrylate ou polyuréthanne.

4. Mélanges de caoutchoucs selon la revendication 1 à 3, caractérisés en ce que la résine phénolique C) est obtenue par condensation avec le formaldéhyde et/ou le butyraldéhyde.

5. Mélanges de caoutchoucs selon une ou plusieurs des revendications 1 à 4, caractérisés en ce que la résine phénolique C) est une phénol-novolaque modifiée par le styrène et/ou acides gras.

6. Mélanges de caoutchoucs selon une ou plusieurs des revendications 1 à 5, caractérisés en ce que la résine phénolique C) est une résine phénolique modifiée par des résines naturelles comme la collophane ou le terpène, respectivement la résine de tallol, le taux en résine naturelle pouvant être prédominant quantitativement.

7. Mélanges de caoutchoucs selon une ou plusieurs des revendications 1 à 6, caractérisés en ce que le plastifiant D) est une huile minérale.

8. Mélanges de caoutchoucs selon une ou plusieurs des revendications 1 à 7, caractérisés en ce que la résine phénolique C) est contenu dans le mélange en une quantité de 0,02 à 11% par rapport à la somme des poids des composants A) et B).
